# EUROPÄISCHE PATENTSCHRIFT

(11) **EP 1 111 911 B1**
(45) Veröffentlichungstag und Bekanntmachung des Hinweises auf die Patenterteilung: **17.02.2010**
(21) Anmeldenummer: 00127334.1
(22) Anmeldetag: 13.12.2000
(51) Int. Cl.: H04N 5/445

(54) **Vorrichtung zur Fernbedienung eines Fernsehempfängers oder Videorecorders**
Device for remote controlling of a television receiver or a videorecorder
Dispositif pour la télécommande d'un récepteur de télévision ou d'un enregistreur vidéo

(30) Priorität: 21.12.1999 DE 19961737
(43) Veröffentlichungstag der Anmeldung: 27.06.2001
(73) Patentinhaber: Grundig Multimedia B.V., 1083 HJ Amsterdam (NL)
(72) Erfinder: Payer, Wolfgang, c/o Grundig AG, 90471 Nürnberg (DE)
(74) Vertreter: LOUIS, PÖHLAU, LOHRENTZ

(56) Entgegenhaltungen:
- EP-A- 0 776 132
- WO-A-98/44647
- WO-A-99/60782
- GB-A- 2 256 515
- US-A- 4 566 034
- US-A- 5 386 251
- US-A- 5 500 691
- US-A- 5 715 020
- US-A- 5 867 223
- US-A- 5 959 539

## Beschreibung

Die Erfindung betrifft eine Vorrichtung zur Fernbedienung eines Fernsehempfängers oder Videorecorders, welche einen Fernbedienungsgeber aufweist, der mit einer Eingabetastatur, einem Befehlscodegenerator und einem Infrarotsender versehen ist.

Verschiedene Fernsehgerätemodelle oder Modell-Familien auch ein- und desselben Fernsehgeräteherstellers werden oftmals mit unterschiedlichen Fernbedienungsgeber-Typen an die Endkunden ausgeliefert, da sich das Design und der Funktionsumfang der einzelnen Fernsehgerätemodelle bzw. Modell-Familien voneinander unterscheiden. Es ist bereits bekannt, dem Benutzer die Eigenschaften und den Funktionsumfang sowie die zugehörigen Bedienmöglichkeiten eines bestimmten Fernsehgerätes in visueller Form auf dem Bildschirm des Fernsehgerätes zu demonstrieren. Zu diesem Zweck ist die in diesen Geräten realisierte Software so ausgestaltet, daß sie die für unterschiedliche Fernbedienungsgeber-Typen notwendigen Benutzerinformationen, Benutzerführungsinformationen sowie Auswahl- und Einstell-Menüs umfaßt. Die für den jeweils vorhandenen FernbedienungsgeberTyp notwendigen Darstellungen und Benutzerführungen werden heute entweder bereits bei der Fertigung des Gerätes oder durch den Händler vor dem eigentlichen Gerätebetrieb ausgewählt bzw. festgelegt. Beim Endkunden erfolgt dann entweder automatisch oder auch nach Eingabe eines vorgegebenen Bedienbefehls eine Anzeige der genannten Benutzerinformationen und Menüs.

Aus US-A-5,959,539 ist ein Verfahren zur Fernbedienung mindestens eines elektronischen Gerätes offenbart, bei dem die Steuerungsdaten an einem Fernbedienungsgerät zu einem elektronischen Gerät übertragen werden. Bei dem Verfahren werden Informationsdaten mindestens bezüglich der Fernbedienungsfunktion und des zu steuernden elektrischen Gerätes zu dem Fernbedienungsgerät übertragen. Diese Informationen werden in dem Fernbedienungsgerät abgespeichert und bei einem Steuerungsvorgang abgerufen, um die jeweils für den Steuervorgang notwendigen Steuerungsdaten auszuwählen und auszusenden.

Aus US-A-5,500,691 ist ein Videosystem offenbart, das eine Fernsteuerungskennzeichen-Einrichtungsanzeige auf einem Fernsehmonitor erzeugenden Empfänger enthält. Ferner ist eine einen Hochfrequenzsender und einen Infrarotsender enthaltende Fernsteuerungseinheit vorhanden, die es einem Benutzer ermöglicht, ein Femsteuerungskennzeichen für den Hochfrequenzsender mittels der Fernsteuerungskennzeichen-Einrichtungseinheit unter Verwendung des Infrarotsenders einzugeben.

Aus US-A-5,386,251 ist ein Fernsehgerät offenbart, welches in der Lage ist, auf eine Fernbedienung einlernt zu werden.

Aus WO98/44647-A1 ist ein Femsteuersystem bekannt, bei welchem eine erste ferngesteuerte Vorrichtung, die auf einem ersten Fernsteuergerät zugeordneten Signale reagiert und eine zweite ferngesteuerte Vorrichtung, die auf zweite einem zweiten Fernsteuergerät zugeordnete Steuersignale reagiert. Die fernzusteuernden Geräte sind miteinander verbunden und tauschen die Fernsteuerbefehle, welche empfangen werden, untereinander aus.

Ausgehend von diesem Stand der Technik liegt der Erfindung die Aufgabe zugrunde, einen Weg aufzuzeigen, der die vorstehend genannte werks- oder händlerseitige Festlegung des Fernbedienungsgeber-Typs entbehrlich macht.

Diese Aufgabe wird durch eine Vorrichtung mit den im Anspruch 1 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, daß die Notwendigkeit, bereits bei der Herstellung des Fernsehgerätes in der Fabrik oder auch beim Händler eine Zuordnung eines bestimmten Fernbedienungsgeber-Typs zu einem vorhandenen Fernsehempfänger oder auch Videorecorder vornehmen zu müssen, entfällt. Dies bedeutet eine Vereinfachung des Fertigungsvorganges bzw. erspart dem Händler Bearbeitungsaufwand. Weiterhin ist durch die Erfindung auch sichergestellt, daß keine fehlerhafte händlerseitige Zuordnung auftreten kann, die ihrerseits wiederum später Probleme beim Endkunden hervorrufen könnte.

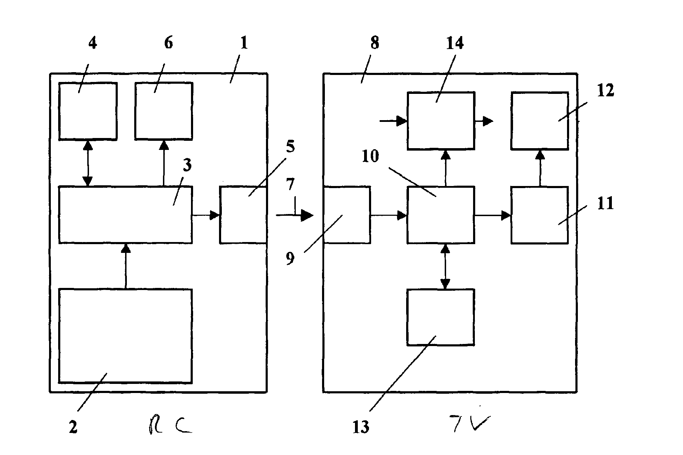

Weitere vorteilhafte Eigenschaften der Erfindung ergeben sich aus der Erläuterung eines Ausführungsbeispiels anhand der Figur.

Diese zeigt die zum Verständnis der Erfindung notwendigen Baugruppen einer Vorrichtung zur Fernbedienung eines Fernsehempfängers. Die gezeigte Vorrichtung weist einen Fernbedienungsgeber 1 auf. Dieser enthält eine Eingabetastatur 2, einen als Befehlscodegenerator vorgesehenen Mikrocomputer 3, einen nichtflüchtigen Speicher 4, einen Infrarotsender 5 und ein Display 6.

Ein mittels der Eingabetastatur 2 eingegebener Bedienbefehl wird durch den Mikrocomputer 3 in ein Befehlscodesignal umgesetzt, welches vom Infrarotsender 5 über eine Infrarot-Übertragungsstrecke 7 an den Fernsehempfänger 8 übertragen wird.

Dort wird das übertragene Infrarotsignal von einem Infrarotempfänger 9 detektiert und an einen Mikrocomputer 10 weitergegeben. Dieser steuert als Reaktion auf den eingegebenen Bedienbefehl den jeweils betroffenen Funktionssteller bzw. Baustein 14 zur Ausführung des eingegebenen Befehls an.

In einem nichtflüchtigen Speicher 13 des Fernsehempfängers 8 sind für eine Vielzahl von Fernbedienungsgebertypen jeweils zugehörige Informationen abgespeichert. Bei diesen Informationen handelt es sich um Benutzerinformationen, Benutzerführungsinformationen, Informationen über die Befehlssätze der verschiedenen Fernbedienungsgebertypen, Informationen, die individuellen Menüdarstellungen entsprechen, Informationen, die bildlichen Darstellungen der einzelnen Fernbedienungsgebertypen entsprechen, usw.

Im Betrieb des Fernsehempfängers 8 ist es notwendig, aus diesen abgespeicherten Informationen diejenigen zu selektieren, die dem jeweils vorhandenen Fernbedienungsgebertyp zugehörig sind. Diese Informationen werden dann vom Mikrocomputer 10 zum einen dazu verwendet, den Textgenerator bzw. die On-Screen-Display-Schaltung 11 derart anzusteuern, daß auf dem Display 12 dem jeweils vorliegenden Fernbedienungsgebertyp zugeordnete Benutzerinformationen angezeigt werden. Zu diesen Benutzerinformationen gehören beispielsweise der Name und die Seriennummer des Fernbedienungsgebers. Weiterhin können auf dem Display 12 Benutzerführungsinformationen angezeigt werden, die dem Benutzer eine Bedienung des Gerätes erleichtern. Ferner können auf dem Display 12 Menüdarstellungen angezeigt werden, die dem Benutzer eine Auswahl von Bedienungsmöglichkeiten offerieren. Dabei kann auch ein Abbild des Fernbedienungsgebers dargestellt werden und dem Benutzer durch farbige Markierungen, durch Blinken oder durch Verwendung eines Cursors gezeigt werden, welche Taste des Fernbedienungsgebers er betätigen muß, um bestimmte Bedienbefehle einzugeben.

Weiterhin werden die selektierten Informationen vom Mikrocomputer 10 auch dazu verwendet, jeweils betroffene Funktionssteller bzw. Bausteine 14 des Fernsehempfängers zur Ausführung gewünschter Funktionen anzusteuern.

Alle vorgenannten selektierten Informationen sind dem vorhandenen Fernbedienungsgebertyp individuell zugeordnet.

Zur Identifikation des vorhandenen Fernbedienungsgebertyps ist der Mikrocomputer 3 des Fernbedienungsgebers 1 dazu in der Lage, ein Befehlscodesignal zu erzeugen, welches Informationen über den Typ des Fernbedienungsgebers 1 enthält. Diese Information ist beispielsweise in einem nichtflüchtigen Speicher 4 des Fernbedienungsgebers abgespeichert und wird vom Mikrocomputer 3 bei Bedarf von dort abgerufen.

Wird eine beliebige Taste der Eingabetastatur 2 des Fernbedienungsgebers 1 betätigt, dann erzeugt der Mikrocomputer 3 automatisch ein Befehlscodesignal, welches sowohl Informationen über den Typ des Fernbedienungsgebers als auch Informationen über den jeweils auszuführenden Befehl enthält. Dieses Befehlscodesignal wird vom Infrarotsender 5 ausgestrahlt, über die Infrarotübertragungsstrecke 7 zum Fernsehempfänger 8 übertragen und von dessen Infrarotempfänger 9 detektiert.

Folglich sendet der Fernbedienungsgeber 1 einer Vorrichtung gemäß der Erfindung zusammen mit jedem Befehl auch eine Identifikationsinformation aus, die den Typ des Fernbedienungsgebers identifiziert. Diese Information über den Typ des Fernbedienungsgebers wird im ferngesteuerten Fernsehempfänger 8 dazu verwendet, dem vorhandenen Fernbedienungsgebertyp zugehörige Informationen zu selektieren und zur Benutzerinformation und zur Gerätesteuerung zu verwenden. Die genannte Selektion ist deshalb notwendig, weil die Software des Fernsehempfängers bereits werksseitig so erstellt wird, daß sie Informationen umfaßt, die einer Vielzahl von verschiedenen Fernbedienungsgebertypen zugehörig sind, wobei aus dieser Vielzahl von Informationen diejenigen selektiert werden müssen, die dem vorhandenen Fernbedienungsgebertyp zugeordnet sind.

Die vorstehend beschriebene Vorrichtung kann nicht nur zur Fernbedienung eines Fernsehempfängers, sondern auch zur Fernbedienung eines Videorecorders verwendet werden. In letzteren Fall erfolgt die Anzeige der Benutzerinformationen, Benutzerführungsinformationen, Menüdarstellungen, etc. auf dem Display eines an den Videorecorder angeschlossenen Fernsehempfängers.

## Patentansprüche

1. Vorrichtung zur Fernbedienung eines Gerätes der Unterhaltungselektronik mit einem Fernbedienungsgeber (1), welcher eine Tastatur, einen Befehlscodegenerator (3) und einen Infrarotsender (5) aufweist, wobei der Befehlscodegenerator (3) zur Erzeugung von Befehlscodesignalen in der Lage ist, die Informationen über den Typ des Fernbedienungsgebers (1) enthalten, der Befehlscodegenerator (3) bei Betätigung einer jeden beliebigen Taste des Fernbedienungsgebers (1) automatisch ein Befehlscodesignal erzeugt, welches Informationen über den Typ des Fernbedienungsgebers (1) und Informationen über die jeweils betätigte Taste enthält,
wobei
das das Gerät der Unterhaltungselektronik einen Infrarotempfänger (9), einen Mikrocomputer (10) und einen nichtflüchtigen Speicher (13) aufweist, in welchem für eine Vielzahl von Fernbedienungsgebern individuelle Informationen abgespeichert sind.

2. Vorrichtung nach Anspruch 1,
**dadurch gekennzeichnet,**
**dass** das Gerät der Unterhaltungselektronik ein Fernsehempfänger, Videorecorder oder Satellitensignalempfänger ist.

3. Vorrichtung nach Anspruch 1,
**dadurch gekennzeichnet,**
**dass** die individuellen Informationen Benutzerinformationen enthalten.

4. Vorrichtung nach Anspruch 1 oder 2,
**dadurch gekennzeichnet,**
**dass** die individuellen Informationen Benutzerführungsinformationen enthalten.

5. Vorrichtung nach einem der Ansprüche 1 bis 4,
**dadurch gekennzeichnet,**
**dass** die individuellen Informationen die Befehlssätze der Fernbedienungsgebertypen enthalten.

6. Vorrichtung nach einem der Ansprüche 1 bis 5,
**dadurch gekennzeichnet,**
**dass** die individuellen Informationen Menüdarstellungen enthalten.

7. Vorrichtung nach einem der Ansprüche 1 bis 6,
**dadurch gekennzeichnet,**
**dass** die individuellen Informationen eine bildliche Darstellung eines Fernbedienungsgebers enthalten.

8. Vorrichtung nach einem der Ansprüche 1 bis 7,
**dadurch gekennzeichnet,**
**dass** der Mikrocomputer (10) nach Empfang eines einen Fernbedienungsgebertyp identifizierenden Befehlssignals zugehörige individuelle Informationen aus dem nichtflüchtigen Speicher (13) ausliest, deren Anzeige auf einem Display (12) initiiert und/oder die Befehlssätze zur Steuerung des Fernsehempfängers oder Videorecorders freigibt.

## Claims

1. Device for remotely controlling an apparatus appertaining to consumer electronics, comprising a remote control transmitter (1) having a keypad, a command code generator (3) and an infrared emitter (5), wherein the command code generator (3) is able to generate command code signals containing information about the type of the remote control transmitter (1), and the command code generator (3), upon actuation of any desired key of the remote control transmitter (1), automatically generates a command code signal containing information about the type of the remote control transmitter (1) and information about the key respectively actuated,
wherein
the apparatus appertaining to consumer electronics has an infrared receiver (9), a microcomputer (10) and a non-volatile memory (13), in which individual information is stored for a multiplicity of remote control transmitters.

2. Device according to Claim 1,
**characterized**
**in that** the apparatus appertaining to consumer electronics is a television receiver, video recorder or satellite signal receiver.

3. Device according to Claim 1,
**characterized**
**in that** the individual information contains user information.

4. Device according to Claim 1 or 2,
**characterized**
**in that** the individual information contains user guidance information.

5. Device according to any of Claims 1 to 4,
**characterized**
**in that** the individual information contains the command sets of the remote control transmitter types.

6. Device according to any of Claims 1 to 5,
**characterized**
**in that** the individual information contains menu representations.

7. Device according to any of Claims 1 to 6,
**characterized**
**in that** the individual information contains a pictorial representation of a remote control transmitter.

8. Device according to any of Claims 1 to 7,
**characterized**
**in that** the microcomputer (10), after receiving a command signal identifying a remote control transmitter type, reads out associated individual information from the non-volatile memory (13), initiates the displaying thereof on a display (12) and/or enables the command sets for controlling the television receiver or video recorder.

## Revendications

1. Dispositif pour télécommander un appareil de l'électronique de divertissement, comportant un émetteur de télécommande (1), qui comporte un clavier, un générateur de code de commande (3) et un émetteur infrarouge (5), ledit générateur de code de commande (3), destiné à générer des signaux de code de commande, étant apte à contenir les informations relatives au type de l'émetteur de télécommande (1), le générateur de code de commande (3), lors de l'actionnement d'une touche quelconque de l'émetteur de télécommande (1), génère automatiquement un signal de code de commande, qui contient des informations sur le type de l'émetteur de télécommande (1) et des informations sur la touche actionnée dans chaque cas,
dans lequel l'appareil de l'électronique de divertissement comporte un récepteur infrarouge (9), un microordinateur (10) et une mémoire (13) non volatile,
dans laquelle sont stockées des informations individuelles pour une pluralité d'émetteurs de télécommande.

2. Dispositif selon la revendication 1, **caractérisé en ce que** l'appareil de l'électronique de divertissement est un téléviseur, un lecteur vidéo ou un récepteur de signaux satellites.

3. Dispositif selon la revendication 1, **caractérisé en ce que** les informations individuelles contiennent des informations de l'utilisateur.

4. Dispositif selon la revendication 1 ou 2, **caractérisé en ce que** les informations individuelles contiennent des informations sur le guide d'utilisation.

5. Dispositif selon l'une quelconque des revendications 1 à 4, **caractérisé en ce que** les informations individuelles contiennent des jeux d'instructions des types d'émetteur de télécommande.

6. Dispositif selon l'une quelconque des revendications 1 à 5, **caractérisé en ce que** les informations individuelles contiennent des présentations de menus.

7. Dispositif selon l'une quelconque des revendications 1 à 6, **caractérisé en ce que** les informations individuelles contiennent une représentation en image d'un émetteur de télécommande.

8. Dispositif selon l'une quelconque des revendications 1 à 7, **caractérisé en ce que** le microordinateur (10), après la réception d'un signal de commande identifiant un type d'émetteur de télécommande, lit dans la mémoire (13) non volatile des informations individuelles associées, initie l'affichage de celles-ci sur un écran (12) et/ou valide les jeux d'instructions pour commander le téléviseur ou le lecteur vidéo.
